Europäisches Patentamt

European Patent Office

Office européen des brevets

(11) Numéro de publication: **0 184 526 B2**

(12) # NOUVEAU FASCICULE DE BREVET EUROPEEN

(45) Date de publication de nouveau fascicule du brevet: (51) Int. Cl.⁵: **C01F 7/14**
**30.11.94**

(21) Numéro de dépôt: **85420208.2**

(22) Date de dépôt: **20.11.85**

(54) Procédé de mise en oeuvre d'un amorçage en deux temps pour l'obtention d'alumine à gros grains.

(30) Priorité: **22.11.84 FR 8418135**

(43) Date de publication de la demande:
**11.06.86 Bulletin 86/24**

(45) Mention de la délivrance du brevet:
**01.06.88 Bulletin 88/22**

(45) Mention de la décision
concernant l'opposition:
**30.11.94 Bulletin 94/48**

(84) Etats contractants désignés:
**CH DE GB IT LI NL**

(56) Documents cités:
**EP-A- 0 102 403      DE-A- 2 941 335**
**DE-A- 3 206 110      FR-A- 2 440 916**
**FR-A- 2 529 877      GB-A- 1 045 216**
**US-A- 4 234 559      US-A- 4 305 913**
**US-A- 4 511 542**

(73) Titulaire: **ALUMINIUM PECHINEY**
**23, rue Balzac**
**F-75008 Paris Cédex 08 (FR)**

(72) Inventeur: **Veyrier, Maurice**
**Eperon St-Jacques**
**Le Tholonet**
**F-13100 Aix-en-Provence (FR)**

(74) Mandataire: **Pascaud, Claude et al**
**PECHINEY**
**28, rue de Bonnel**
**F-69433 Lyon Cédex 3 (FR)**

EP 0 184 526 B2

**Description**

*Domaine téchnique de l'invention*

La présente invention concerne un procédé de mise en oeuvre de précipitation d'hydroxyde d'aluminium par amorçage en deux temps pour l'obtention, à forte productivité, d'alumine à gros grains, dont moins de 10% ont leur plus petite dimension inférieure à 45 micromètres, à partir de solutions d'aluminates alcalins sursaturés obtenues par le procédé BAYER d'attaque alcaline des bauxites.

Le procédé Bayer, largement décrit dans la littérature spécialisée, constitue la technique essentielle de production de l'alumine destinée à être transformée en aluminum par électrolyse ignée. Selon ce procédé, la bauxite est traitée à chaud par une solution aqueuse d'hydroxyde de sodium provoquant ainsi la solubilisation de l'alumine et l'obtention d'une solution sursaturée d'aluminate de sodium. Après séparation de la phase solide constituant le résidu inattaqué du minerai (boues rouges), la solution sursaturée d'aluminate de sodium est généralement ensemencée avec de l'hydroxyde d'aluminium désigné ci-après par l'expression ≪amorce≫ dans le but de provoquer la précipitation d'un trihydroxyde d'aluminium Al-$(OH)_3$.

Il existe plusieurs variantes industrielles de production du trihydroxyde d'aluminium par attaque alcaline Bayer des bauxites, que l'on a l'habitude de classer en deux catégories, l'une sous le nom de procédé européen, l'autre sous le nom de procédé américain.

Selon le procédé européen, la précipitation du trihydroxyde d'aluminium s'effectue au cours de l'opération de décomposition d'une solution aqueuse d'aluminate de sodium à haute concentration en $Na_2O$ caustique, titrant de 130 à 170 grammes de $Na_2O$ par litre de solution d'aluminate de sodium à décomposer. Il faut entendre, par ≪concentration en $Na_2O$ caustique≫, la quantité totale de $Na_2O$ exprimée en gramme par litre dans la solution d'aluminate de sodium à décomposer, aussi bien sous la forme d'aluminate de sodium que sous la forme d'hydroxyde de sodium. Selon ce procédé, on introduit dans la solution d'aluminate de sodium à décomposer, une quantité de triydrate généralement comprise entre 350 g/l et 600 g/litre de suspension jouant le rôle d'amorçage, la décomposition de la solution s'effectuant en général à un température au plus égale à 55°C. Un tel procédé conduit à une forte productivité d'alumine pouvant atteindre 80 g de $Al_2O_3$ par litre de la solution d'aluminate de sodium, mais le trihydroxyde d'aluminium ainsi produit est généralement de fine granulométrie et donne par calcination une alumine dont la finesse est acutellement estimée gênante pour l'électrolyse ignée, en raison de la production de poussières.

Selon le procédé américain, la précipitaton du trihydroxyde d'aluminium s'effectue par la décomposition d'une solution aqueuse d'aluminate de sodium à faible concentration en $Na_2O$ caustique, ne dépassant pas 110 g de $Na_2O$ par litre d'une solution d'aluminate de sodium à décomposer. On introduit dans la solution d'aluminate de sodium à décomposer une quantité d'$Al(OH)_3$ jouant le rôle d'amorce, en quantité plus faible que dans le procédé européen et de l'ordre de 100 g/l à 200 g/l de la solution d'aluminate à décomposer, la décomposition s'effectuant par contre à une température plus élevée, par exemple 70°C. Toutes ces conditions opératoires réunies conduisent à la production d'un trihydroxyde d'aluminium à plus gros grains que par le procédé européen, et ces gros grains, après classification et calcination, donnent une alumine (dite ≪sandy coarse≪) ayant la granulométrie exigée pour la production d'aluminium par électrolyse ignée. Mais, par un effet contraire, lesdites conditions opératoires provoquent une diminution du rendement, qui apparaît ainsi beaucoup plus faible que dans le procédé européen, se situant en général autour de 50 g d'$Al_2O_3$ par litre de la solution d'aluminate, dans le cas de la production d'une alumine ≪sandy coarse≫. Les tentatives d'amélioration de la productivité par diminution de la température de décomposition et l'introduction dans la solution d'aluminate de sodium à décomposer, d'une quantité plus important d'$Al(OH)_3$ jouant le rôle d'amorce, se soldent par la disparition de l'alumine à granulométrie ≪sandy coarse≫ et l'apparition d'une alumine à plus faible granulométrie.

*Etat de la technique antérieure*

Depuis longtemps, et comme l'atteste le grand nombre de publications dans ce domaine, de nombreuses tentatives ont été faites tant sur le procédé américain que sur le procédé européen, pour trouver un procédé d'obtention de trihydroxyde d'aluminium à grosse granulométrie, bénéficiant de la productivité du procédé européen.

Parmi les procédés qui ont été préconisés, quelques-uns mettent la totalité de l'amorce en début de décomposition, c'est le cas des brevets US 3 607 113, US 3 649 184 et de notre demande de brevet FR-A-2 529 877 mais la plupart procèdent à un amorçage en deux temps, une faible partie de l'amorce étant

EP 0 184 526 B2

mise en début de décomposition et le solde ajouté après un temps variable entre 6 et 24 heures. La présente invention se classe dans la catégorie des procédés d'amorçage en deux temps.

Un premier procédé d'amorçage en deux temps est décrit dans le brevet américain US-A-2 657 978, dont le but est de favoriser l'augmentation de la productivité en hydroxyde d'aluminium de forte granulométrie et qui utilise l'introduction en deux périodes du trihydroxyde d'aluminium jouant le rôle d'amorce la première période consistant à introduire la seule quantité d'amorce nécessaire à l'obtention de cristaux de grosse granulmétrie, tandis que, dans la deuxième période, est introduite une nouvelle quantité d'amorce. Mais, à travers les résultats qui sont énoncés, l'augmentation de la productivité apparaît faible et, par à même, peu intéressante industriellement.

Un autre procédé d'amorçage en deux temps (brevet français FR - A - 2 440 916) préconise la décomposition en deux phases de la solution d'aluminate de sodium sursaturée: la première phase de décomposition consiste à introduire dans la solution d'aluminate de sodium une quantité contrôlée d'une suspension d'amorce fine, cette phase se déroulant à une température comprise entre 77°C et 66°C. Puis, dans la deuxième phase de décomposition on introduit dans la suspension refroidie provenant de la première phase une quantité suffisante d'amorce de plus grosse granulométrie, de telle façon que la quantité cumulée d'amorce introuite dans les deux phases représente au moins 130 g de trihydroxyde d'aluminium par litre de solution à décomposer, et au plus 400 g/l.

La part essentielle de l'amélioration de productivité revendiquée est due à une cause totalement indépendante du procédé de décompostion: on a supposé que l'on amenait à la décomposition des liqueurs plus fortement sursaturées. En fait, le procédé ne peut prétendre approcher la productivité des décompositions européennes pour des multiples raisons: selon les exemples donnés dans ce brevet, la charge d'amorce est notablement plus faible: inférieure à 400 g/litre de liqueur contre au moins 600 g dans les procédés européens et jusqu'à 2000 g'litre de liqueur dans notre demande FR-A-2 529 877. En outre, l'alumine contenue dans les décomposeurs comporte une forte proportion de gros grains et, de ce fait, constitue une amorce à faible surface spécifique.

Enfin, la concentration des liqueurs entrant en décomposition est plus faible: 125 g $Na_2O$/l contre 150 à 170 g/l dans les cycles européens, la productivité variant de façon presque proportionnelle avec la concentration.

Le brevet français FR-A-1 391 159 et le brevet US-A-4 305 913 préconisent deux procédés relativement voisins de décomposition par étapes d'une solution d'aluminate de sodium sursaturée a une température comprise entre 74°C et 85°C, la quantité introduite étant choisie entre 70 et 140 g/l de solution d'aluminate de sodium à décomposer. Mais ces procédés, bien que produisant une alumine de ganulométrie apparemment favorable, restent de faible productivité par rapport au procédé européen. Il y a au moins deux raisons à cela:

— la charge d'amorce est très faible: moins de 200 g/litre d'aluminate contre 600 g/l dans la plupart des procédés européens et jusqu'à 2000 g dans notre demande FR-A-2 529 877;

- la concentration en soude est faible: 140 g $Na_2O$ (soit 240 g exprimés en $CO_3Na_2$/litre) contre 150 à 170 g/l dans les décomposition européennes.

En outre, ces procédés comportent deux circuits en parallèle sur la liqueur et en série su les solides, il y a plusieurs qualités d'amorce, le tout nécessitant de nombreux appareils, de classement ou de séparation liquide/solide. Cela conduit à des investissements onéreux et à une exploitation relativement complexe.

Il apparaît ainsi que de nombreux moyens ont été mis en oeuvre pour tenter d'aboutir à un procédé de décompostion de solution d'aluminate de sodium sursaturée disposant simultanément des seules qualités reconnues aux procédés américain et européen, c'est-à-dire permettant la production d'une alumine de grosse granuolométrie (type sandy coarse) avec une forte productivité. Mais l'homme de l'art est dans l'obligation de reconnaître que les procédés proposés fournissent des solution incomplètes et peu satisfaisantes puisque, pour parvenir à une alumine de granulométrie acceptable, il faut, en général subir un perte de la forte productivité en alumine que l'homme de l'art ne peut plus acceppter industriellement.

C'est ainsi que, dans le brevet français FR-2 318 113 (CA-A-1 098 284) on revendique la production d'alumine à gros grains avec une productivité qui approche celle que l'on obtient dans les cycles européens. Néanmoins, ce procédé ne comportant pas de phase d'agglomération, le grossisement des cristaux est essentiellement obtenu par croissance cristalline. Or, il est établi de façon irréfutable que l'alumine obtenue par croissance cristalline est beaucoup plus fragile que celle qui est obtenue par agglomération des cristaux d'amorce et la croissance cristalline qui en résulte.

Dans notre demande de brevet FR-A-2 529 877 PECHINEY), nous avons proposé un procédé de production de trihydroxyde d'aluminium dont 10% au plus des particules sont inférieures à 45 micromètres, et à productivité améliorée, procédé selon lequel, dans la zone de décomposition du procédé Bayer comportant une succession d'étages en cascade, on crée une suspension à haute teneur en matière sèche

3

d'au moins 700 g/l et de préférence 800 à 2000 g/l d'aluminate alcalin, et on amorce, dans la zone de décomposition, par des cristaux de trihydroxyde d'aluminium de granulométrie non sélectionnée, et on sépare, dans une zone de classification finale, la partie à grosse granulométrie, qui constitue la production, et la suspension restante qui, après une nouvelle séparation, constitue l'amorce non sélectionnée qui est recyclée dans la zone de décomposition.

Enfin, dans la demande de brevet européen EP-A-102 403, on décrit un procédé comportant cinq stades succesifs et dont une variante de mise en oeuvre peut comporter un amorçage en deux temps:

Selon ce procédé la solution sursaturée d'aluminate de sodium, mélangée à une concentration d'hydroxyde de sodium de 200 à 300 g/l, considérée comme du $Na_2CO_3$, traverse, à des températures comprises entre 80 et 65°C, une cascade d'agglomérateurs montés en série et une partie de l'oxyde d'aluminium est ajoutée en tant qu'hydrate d'oxyde d'aluminium et au cours de ce processus; on rajoute, dans le premier agglomérateur, une suspension de cristaux fins d'amorce et le premier agglomérateur a une teneur en matière solide de 10 à 50 g/l d'aluminate, considérée comme de l'oxyde d'aluminium ($Al_2O_3$); la solution d'aluminate de sodium contenat les agglomérats, passe ensuite une première cascade de cristallisateurs montés en série, et, une partie de l'hydroxyde d'aluminium est agitée de façon que, dans chaque cristallisateur, au moins 80% du volume total aient une teneur élevée en matière solide et que la partie supérieure du volume résiduel ait une teneur en matière solide considérée comme oxyde d'aluminium ($Al_2O_3$) n'excédant pas 20 g/l, ne dépassant pas, notamment, 3 g/l et où les parties inférieure et supérieure de la solution, seulement après s'être mélangées, pénètrent dans le cristallisateur suivant; les écoulements réunis, que l'on trouve dans le dernier cristallisateur et qui sont constitués par l'écoulement arrivant dans le premier cristallisateur et par l'hydrate d'oxyde d'aluminium formé dans la première cascade de cristallisateurs, sont refroidis en faisant passer la température de 55°C à 45°C; les écoulements, sont agités dans une deuxième cascade de cristallisateurs montés en série, de façon que, dans chaque cristallisateur, au moins 80% du volume total aient une teneur élevée en matière solide et que la partie supérieure du volume résiduel ait une teneur en matière solide exprimée en oxyde d'aluminium ($Al_2O_3$) n'excédant pas 20 g/l, ne dépassant pas, nottament 3 g/l et, enfin, les cristaux en suspension, extraits du dernier cristallisateur de la seconde cascade de cristallisateurs, sont fractionnées en cristaux d'inoculation fins ou moyens, le cas échéant, et en rejets cristallins grossiers. Ce procédé revendique une productivité de l'ordre de 80 grammes par litre (exprimée en $Al_2O_3$) de cristaux de trihydrate d'alumine.

Cette productivité, bien qu'intéressante, est limitée du fait suivant: l'alumine qui circule dans les décomposeurs comprend la fraction qui sera prélevée pour la production. De ce fait, elle a nécessairement une grosse granulométrie et une faible surface spécifique. Elle constitue donc une amorce de faible efficacité, étant entendu que la cinétique de décomposition est directement proportionnelle à la surface d'amorce en présence.

*Objet de l'invention*

L'objet de la présente invention est un procédé continu de production de trihydrate d'alumine qui concilie à la fois une productivité élevée (qui peut atteindre 85 à 87,5 g/l exprimés en $Al_2O_3$), une granulométrie conforme aux exigences des producteurs d'aluminium (sensiblement moins de 10% de grains inférieurs à 45 micromètres), et une «solidité» des grains, qui réduit la formation indésirable de fines lors de la calcination, du transport et de la mise en oeuvre de l'alumine, notamment dans les usines d'électrolyse.

Ce procédé est caractérisé par trois stades sucessifs, mis en oeuvre dans une cascade de bacs disposés en série: un stade d'agglomération au cours duquel les particules fines d'alumine s'agglomèrent pour former des grains de plus grosse taille, un deuxième stade qui assure la consolidation des grains et le grossissement de la granulométrie par rétention sélective des gros grains à l'issue duquel on extrait la totalité de la production et, enfin, un stade d'épuisement des liqueurs avec addition massive d'amorce fine à grande surface spécifique, ce dernier stade fournissant à la fois les amorces pour le premier stade et la totalité de l'amorce pour le stade d'épuisement des liqueurs.

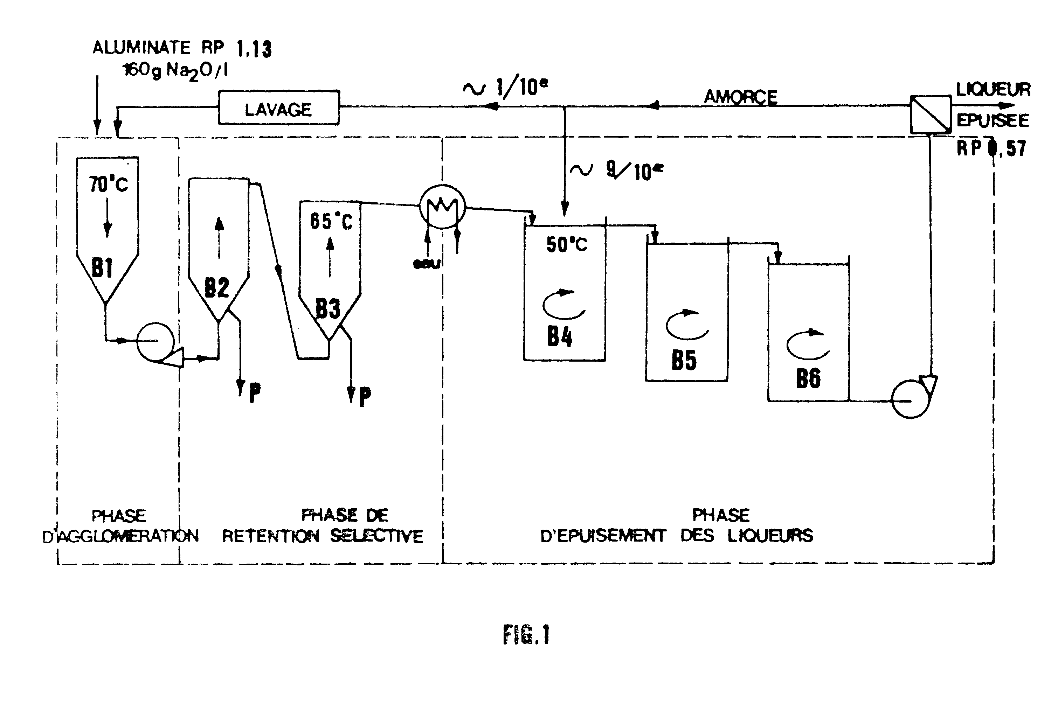

La fig. 1 schématise la mise en oeuvre du procédé avec la succession des bacs en cascade dont on a limité le nombre de façon à ne pas surcharger les figures. On notera que les bacs de rétention sélective sont alimentés par le fond pour assurer la formation d'un «lit fluidisé» ce qui est un des moyens d'effectuer une rétention sélective des gros grains.

Dans le premier stade dit d'agglomération, on introduit dans le bac B1 une liqueur d'aluminate classique, avec une teneur équivalente en $Na_2O$ comprise entre 110 et 175 g/litre, un rapport pondéral alumine $Na_2O$ caustique de l'ordre de 1,10 à 1,20 à une température comprise entre 65 et 80°C et généralement entre 70 et 75°C.

On ensemence la solution d'aluminate avec une amorce fine (50% < 45 micromètres par exemple), à forte suface spécifique, provenant, comme on l'expliquera un peu plus loin, du troisième stade dit ≪d'épuisement de liqueurs≫. Cette phase d'agglomération est conduite à une température comprise entre 65 et 80°C (en moyenne 70°C), pendant une durée de 6 à 20 heures (en moyenne 8 à 10 heures) et la quantité d'amorce utilisée est comprise entre 20 et 120 de trihydrate par litre d'aluminate, avec une moyenne de l'ordre de 30 à 50 g/l.

Ces conditions de température et d'amorçage conduisent à l'obtention d'une alumine à gros grains dès les premières heures de la décomposition, grâce à un faible taux de nucléation et à un taux d'agglomération élevé des nucléi.

Dans le bac B1, la circulation de la liqueur d'aluminate s'effectue de haut en bas. Cette circulation de la suspension de trihydrate d'alumine dans ce bac est inférieure à ce qu'elle est à l'entrée et à la sortie. De plus, les grosses particules ont un temps de séjour— donc une concentration — diminué par rapport aux fines, ce qui, lié à l'absence de tout moyen d'agitation, va dans un sens favorable à l'agglomération.

Le deuxième stade est effectué à une température inférieure — de façon à augmenter la vitesse de décomposition de l'aluminate — de l'ordre de 50 à 65°C (en moyenne 60°C) pendant une durée de 10 à 25 heures (en moyenne 15 heures), et on vise l'obtention d'une teneur en ≪matière sèche≫ dans les bacs supérieure à 300 g/l, et de préférence comprise entre 400 et 800 g/litre (on entend par ≪matière sèche≫ le trihydrate d'alumine sec exprimé en $Al(OH_3)$.

La caractéristique essentielle de ce second stade est que l'on y provoque une rétention sélective d'alumine par rapport à sa granulométrie, en favorisant la circulation rapide des particules les plus fines de trihydrate et en allargeant le temps de séjour des particules les plus grosses, de façon à assurer à la fois leur grossissement et leur consolidation. La rétention sélective des gros grains est obtenue par des moyens appropriés comme, par exemple, la technique dite du lit fluidisé, décrite dans le brevet français FR 1 187 352 (au nom de la Sté d'Electrochimie — d'Elcetrométallurgie et des Aciéries Electriques d'Ugine).

Au cours de ce deuxième stade de rétention sélective des gros grains obtenu par un allongement du temps de séjour dans une zone où la cinétique de décoposition de l'aluminate est encore rapide, l'alumine précipite sélectivement sur les gros grains, ce qui entraîne une déformation de l'histogramme granulométrique en faveur des gros grains d'alumine, et une consolidation des grains par amélioration du facteur de forme: on passe d'une forme irrégulière, fragile, à une forme plus arrondie, résistant bien à l'attration. Il est bien connu, en effet, que les grains obtenus par une agglomération suivie d'un nourissement sont particulièrement solides.

Pour obtenir cette double amélioration sur la grosseur et sur la forme des grains, on fait jouer la rétention sélective sur les grains de trihydrate d'alumine ayant une dimension moyenne au moins égale à 50 à 60 micromètres de façon à leur assurer un temps de séjour moyen dans le bac au moins égal à deux fois, et, de préférence, compris entre 5 et 10 fois le temps de séjour moyen de la liqueur d'aluminate, ce que l'on obtient en assurant une vitesse ascensionnelle de la liqueur à la partie supérieure du bac comprise entre 0,5 et 3 mètres par heure, et, de préférence, entre 1 et 2 mètres/heure.

Il est important de remarquer que ce dernier mécanisme de grossissement sélectif des grains d'alumine n'est pas sensible aux dépôts d'oxalate et aux autres impuretés organiques. Cela constitue un avantage par rapport aux procédés de contrôle granulométrique basés exclusivement sur le seul mécanisme d'agglomération qui, lui, est sensible à ces impuretés. Par ailleurs,le dépôt d'alumine améliore la solidité des grains en leur conférant des formes plus arrondies qui les rendent moins vulnérables aux manutentions: c'est ce que nous avons appelé la ≪consolidation≫.

En pratique, on alimente les bacs successifs de deuxième phase par le fond, à partir de la surverse du bac précèdent, sauf dans le cas du premier bac de cémentation B2 qui est alimenté par la liqueur prélevée à la partie inférieure du bac de germination B1. Selon ce processus, le flux montant, contrairement à ce qui se passait dans le bac B1, contracte la suspension dont la concentration augmente sensiblement, ce qui va dans le sens d'une productivité élevée.

Quelle que soit la technique utilisée pour réaliser une rétention sélective des gros grains production (P) — et c'est là un des points originaux du procédé — est prélevée en totalité à ce stade. Elle se caractérise par une teneur inférieure à 5% en produit fin inférieur à 45 $\mu m$, et par un rendement pouvant dépasser 85 kg (exprimé en $Al_2O_3$) par mètre-cube de liqueur d'aluminate entrant dans le bac B1.

La production peut être extraite, soit à partir de chacun des bacs de la deuxième phase, soit à partir du dernier bac de cette phase; dans ce dernier cas, il convient d'assurer la circulation des gros grains d'un bac vers le bac suivant.

Le troisième stade, dit d'épuisement de liqueur (bacs B4, B5, B6), est caractérisé par un apport massif d'amorces fines (de 400 à 800 g de trihydrate par litre de suspension, et en moyenne 750 g/l) à forte surface spécifique. La température est fixée entre 45 et 55°C (en moyenne 50°C) et la durée de cette troisième phase est de 10 à 20 heures (en moyenne 15 h) et on agite de façon habituelle.

On extrait à la sortie des derniers bacs (B6) la suspension à environ 800 g/l de matières sèches par litre de suspension, comportant environ 40% de fines inférieures à 45 μm), ce qui, après séparation par filtration, de façon habituelle, fournit d'une part une liqueur épuisée (dont la teneur en aluminate de sodium est tombée à un rapport pondéral de 0.57 environ) qui est concentrée et recyclée dans le stade d'attaque de la bauxite, et d'autre part le trihydroxyde d'aluminium dont une petite partie (environ 1/10°) est utilisé, après lavage (pour éliminer les composés organiques et notamment l'oxalate de sodium), comme amorce dans le premier stade de germination, et dont le reste est recyclé comme amorce en tête de la zone d'épuisement de liqueur. La fraction d'amorce lavée peut être ajoutée en totalité au premier stade ou bien classée en amorce fine ajoutée au début du premier stade et en amorce moyenne ajoutée au début du deuxième stade.

*Exemple de mise en oeuvre*

On a introduit, dans une unité industrielle de production d'alumine BAYER, une solution d'aluminate de soidum sursaturée obtenue par l'attaque, à 245°C, d'un mélange de bauxites français et australienne ayant la composition suivante, exprimée en pour-cent en poids:

| COMPOSITION | BAUXITE | |
|---|---|---|
| | FRANCAISE | AUSTRALIENNE |
| Perte au feu | 13,47 | 23,88 |
| $SiO_2$ | 5,3 | 5,3 |
| $Al_2O_3$ | 52,5 | 54,8 |
| $Fe_2O_3$ | 24,0 | 13,0 |
| $TiO_2$ | 2,7 | 2,6 |
| CaO | 1,8 | 0,05 |
| $V_2O_5$ | 0,08 | 0,04 |
| $P_2O_5$ | 0,20 | 0,08 |
| C organique | 0,15 | 0,25 |

La solution d'aluminate de sodium à décomposer avait la composition suivante:

| | |
|---|---|
| $Na_2O$ caustique | 160 g/l |
| $Na_2O$ carbonatée | 18 g/l |
| $Al_2O_3$ | 181 g/l |
| $Al_2O_3/Na_2O$ caust | 1,13 |
| C organique | 12 g/l |

Cette solution d'aluminate de sodium à décomposer était introduit à raison de 120 m$^3$ à l'heure et à une température de 70°C dans le bac d'agglomération, avec adjonction simultanée de 45 kilogrammes par m$^3$ d'amorce provenant de la phase d'épuisement, et préalablement lavée pour éliminer les composés organiques (oxalate).

La totalité de la liqueur d'aluminate, extraite par le fond du bac d'agglomération, dans lequel elle a séjourné, en moyenne 8 heures, a été ramenée à une température de 60°C par passage dans un échangeur, puis refoulée à la partie inférieure du premier bac de la deuxième zone.

Cette zone comprenait 3 bacs en série assurant un temps de séjour de 18 h à la liqueur; ces bacs étaient alimentés par la partie inférieure et fonctionnaient suivant le principe du lit fluidisé décrit dans le brevet FR-A-1 187 352. La vitesse apparente de remontée du liquide dans la partie supérieure du bac était de 1,6 m/h. Cette vitesse ne permet pas d'entraîner ver la surverse du bac les grains dont le diamètre est supérieur à 60 μm, ils y sont ainsi retenus jusqu'à ce qu'on les prélève comme alumine de production. La quantité d'alumine dans les bacs étant de 650 g/l de suspension, le temps de séjour moyen des grains d'un diamètre supérieur à 60 μm est entre quatre et cinq fois plus important que celui de la liqueur. Par contre, les grains de diamètre inférieur à 60 μm ont un temps de séjour qui se rapproche d'autant plus de celui de la liqueur que leur diamètre est plus faible. L'alumine prélevée au titre de la production est extrait au moyen d'une batterie de cyclones.

La liqueur sortant de cette zone contient environ 20 g/l d'alumine fine en suspension: elle est refroidie à 50°C et mélange avec 1090 kg/m$^3$ (soit 750 g/l de suspension) d'amorce fine, contenant 40% de grains de moins de 45 $\mu$m, et ayant une surface spécifique de 820 cm$^2$/g. Cette suspension est agitée dans des bacs assurant 16 heures de temps de séjour puis filtrée. L'alumine est récyclée comme amorce au début de cette troisième phase après prélèvement de la partie destinée, après lavage, à être utilisée comme amorce dans la première phase. La liqueur issue de la filtration dont te rapport Al$_2$O$_3$/Na$_2$O caustique est tombé de 1,13 à 0,57, est recyclée vers l'atelier d'évaporation puis vers l'attaque d'une nouvelle quantité de bauxite.

Les résultat obtenus sont réunis ci-après:

. Productivité des liqueurs d'aluminate:

. 87,5 kg Al$_2$O$_3$/m$^3$ de liqueur d'aluminate introduite en tête,

. granulométrie de l'alumine produite:

passant cumulé à:

| 45 $\mu$m | 64 $\mu$m | 96 $\mu$m | 128 $\mu$m |
|---|---|---|---|
| 3% | 14% | 58% | 92% |

. indice d'attrition du produit calciné, suivant la version modifiée du test de Forsythe-Hertwig: 11.

(N.B. - cette méthode est décrite dans la publication suivante:

FORSYTHE W.L. & HERTWIG W.R. Attrition characteristics of fluid cracking catalysts. Ind. and Engr. Chem. <u>41</u>. p. 1200-1206.

*Conclusion*

La mise en oeuvre de l'invention a permis de produire une alumine d'excellente qualité granulométrique puisqu'elle contient 3% seulement de produit inférieur à 45 $\mu$m.

La productivité des liqueurs rejoint celle que l'on obtient dans les cycles européens produisant de l'alumine fine.

**Revendications**

1. Procédé de mise en oeuvre d'un amorçage en deux temps destiné à l'obtention à forte productivité d'alumine à gros grains dite "sandy coarse" par précipitation dans une succession de bacs en cascade d'une solution sursaturée d'aluminate de sodium provenant de l'attaque alcaline de bauxite selon le procédé BAYER, caractérisé en ce que :

   - au premier stade d'agglomération, on introduit dans le bac non agité la liqueur d'aluminate sursaturée avec une teneur équivalente en Na$_2$O comprise entre 110 et 175 g/litre, à une température comprise entre 65 et 80°C, et on l'ensemence avec une quantité d'amorce lavée comprise entre 20 et 120 g/l d'aluminate;

   - au second stade, on effectue dans les bacs une rétention sélective des plus gros cristaux de trihydrate d'alumine formés, de façon à obtenir une teneur en matières sèches comprise entre 300 et 800 g/litre de suspension, par réglage de la vitesse ascensionnelle de la liqueur dans le lit fluidisé de cristaux de trihydrate en suspension, entre 0,5 et 3 mètres par heure à la partie supérieure des bacs et on extrait la totalité du trihydrate d'alumine, destiné à la production d'alumine, au cours ou à l'issue de ce second stade;

   - dans un troisième stade, dit d'épuisement de liqueurs, on introduit dans la liqueur à une température comprise entre 45°C et 55°C une quantité d'amorce comprise entre 400 et 800 g par litre de suspension, soit entre 480 et 1200 g par litre de liqueur, pour former une suspension qui est maintenue sous agitation pendant 10 à 20 heures;

   - on sépare à la fin de ce troisième stade, d'une part une liqueur d'aluminate épuisée, qui est recyclée de façon connue, et d'autre part, du trihydrate d'alumine à grains très fins dont une petite partie est recyclée après lavage comme amorce pour le stade d'agglomération, et tout le reste est recyclé comme amorce dans le stade d'épuisement de liqueurs.

2. Procédé, selon revendication 1, caractérisé en ce que la fraction d'amorce lavée peut être soit ajoutée en totalité au début de la première phase, soit classée en amorce fine ajoutée au début de la première phase et en amorce moyenne ajoutée au début de la deuxième phase.

**3.** Procédé selon la revendication 1, caractérisé en ce que le second stade est mis en oeuvre à une température comprise entre 50 et 65°C.

**4.** Procédé selon revendication 1, caractérisé en ce que, au second stade la durée moyenne de séjour de la liqueur est comprise entre 10 et 25 heures.

**5.** Procédé, selon l'une quelconque des revendications 1 à 4, caractérisé en ce que, au second stade, on effectue une rétention sélective des grains de trihydrate d'alumine ayant une dimension moyenne au moins égale à 50 à 60 micromètres, de façon à leur assurer un temps de séjour moyen dans le bac au moins égal à deux fois le temps de séjour moyen de la liqueur d'aluminate.

**6.** Procédé, selon revendication 5, caractérisé en ce que, au second stade, le temps de séjour moyen des grains de trihydrate d'alumine de dimension au moins égale à 50 à 60 micromètres est compris entre cinq et dix fois le temps de séjour moyen de la liqueur en aluminate.

**7.** Procédé, selon revendications 5 ou 6, caractérisé en ce que la vitesse ascensionnelle moyenne de la liqueur dans le bac est comprise, de préférence, entre 1 et 2 mètres par heure.

**Claims**

**1.** A process for effecting seeding in two phases, which is intended for the production at a high level of productivity of large-grain alumina, referred to as 'sandy coarse' alumina, by precipitation in a succession of tanks in cascade relationship of a supersaturated solution of sodium aluminate coming from the alkaline attack on bauxite in accordance with the BAYER process, characterised in that:
- in the first agglomeration stage, the supersaturated aluminate liquor is introduced into the non-agitated tank, with an equivalent amount in terms of $Na_2O$ of between 110 and 175 g/litre, at a temperature of between 65 and 80°C, and seeding is effected with an amount of washed seed of between 20 and 120 g/l of aluminate;
- in the second stage, selective retention of the largest crystals of aluminium trihydrate formed is effected in the tanks, so as to produce a content of dry matter of between 300 and 800 g/litre of suspension, by regulating the rate of rise of the liquor in the fluidised bed of crystals of trihydrate in suspension at between 0.5 and 3 metres per hour in the upper part of the tanks, and the whole of the aluminium trihydrate which is intended for the production of alumina is extracted in the course of or at the end of the second stage;
- in a third stage, referred to as a liquor depletion stage, an amount of seed of between 400 and 800 g per litre of suspension, that is to say between 480 and 1200 g per litre of liquor, is introduced into the liquor at a temperature of between 45°C and 55°C to form a suspension which is maintained in an agitated condition for 10 to 20 hours; and
- at the end of the third stage, separation is effected on the one hand of a depleted aluminate liquor which is recycled in known fashion and on the other hand aluminium trihydrate with very fine grains, a small portion of which is recycled after washing as a seed for the agglomeration stage while all the remainder is recycled as a seed to the liquor depletion stage.

**2.** A process according to claim 1 characterised in that the fraction of washed seed may either be added in its entirety at the beginning of the first phaase or graded to provide fine seed which is added at the beginning of the first phase and medium seed which is added at the beginning of the second phase.

**3.** A process according to claim 1 characterised in that the second stage is carried out at a temperature of between 50 and 65°C.

**4.** A process according to claim 1 characterised in that, in the second stage, the mean residence time of the liquor is between 10 and 25 hours.

**5.** A process according to any one of claims 1 to 4 characterised in that, in the second stage, selective retention of the grains of aluminium trihydrate which have a mean dimension that is at least equal to 50 to 60 micrometres is effected, so as to give them a mean residence time in the tank which is at least equal to twice the mean residence time of the aluminate liquor.

6. A process according to claim 5 characterised in that, in the second stage, the mean residence time of the grains of aluminium trihydrate of a dimension that is at least equal to 50 to 60 micrometres is between five and ten times the mean residence time of the aluminate liquor.

7. A process according to claim 5 or claim 6 characterised in that the mean rate of rise of the liquor in the tank is preferably between 1 and 2 metres per hour.

**Patentansprüche**

1. Verfahren zum Einsatz einer zweistufigen Impfung zum Erhalten von grobkörnigem, sog. "sandy coarse"-Aluminiumoxid mit hoher Produktivität durch Ausfällung einer vom alkalischen Bauxitaufschluß nach dem BAYER-Verfahren stammenden übersättigten Natriumaluminatlösung in einer Wannenfolge in Kaskade,
   **dadurch gekennzeichnet,**
   - daß man im ersten Agglomerationsschritt in die nicht gerührte Wanne die übersättigte Aluminatflüssigkeit mit einem äquivalenten Gehalt an $Na_2O$ im Bereich von 110 bis 175 g/l bei einer Temperatur im Bereich von 65 bis 80 °C einführt und sie mit einer gewaschenen Impfmaterialmenge im Bereich von 20 bis 120 g/l Aluminat impft,
   - im zweiten Schritt in den Wannen eine selektive Zurückhaltung der gröbsten gebildeten Aluminiumoxidtrihydratkristalle durch Regulierung der Aufstiegsgeschwindigkeit der Flüssigkeit in der Wirbelschicht von Trihydratkristallen in Suspension zwischen 0,5 und 3 Metern je Stunde im oberen Teil der Wannen derart bewirkt, um einen Gehalt an Trockensubstanzen im Bereich von 300 bis 800 g/l Suspension zu erhalten, und im Lauf oder am Ausgang des zweiten Schritts die Gesamtheit des Aluminiumoxidtrihydrats, das zur Erzeugung von Aluminiumoxid bestimmt ist, abzieht,
   - in einem dritten, sog. Flüssigkeitserschöpfungsschritt in die Flüssigkeit bei einer Temperatur im Bereich von 45 °C bis 55 °C eine Impfmaterialmenge im Bereich von 400 bis 800 g/l Suspension, d.h. von 480 bis 1200 g/l Flüssigkeit einführt, um eine Suspension zu bilden, die während 10 bis 20 Stunden unter Rühren gehalten wird, und
   - am Ende dieses dritten Schritts einerseits eine erschöpfte Aluminatflüssigkeit, die in bekannter Weise rückgeführt wird, und andererseits sehr feinkörniges Aluminiumoxidtrihydrat trennt, von dem ein kleiner Teil nach Waschen als Impfmaterial für den Agglomerationsschritt rückgeführt wird und der ganze Rest als Impfmaterial in den Flüssigkeitserschöpfungsschritt rückgeführt wird.

2. Verfahren nach Anspruch 1,
   dadurch gekennzeichnet,
   daß der Anteil an gewaschenem Impfmaterial insgesamt zu Beginn des ersten Schritts zugesetzt oder in feines Impfmaterial, das zu Beginn des ersten Schritts zugesetzt wird, und in mittleres Impfmaterial klassiert werden kann, das zu Beginn des zweiten Schritts zugesetzt wird.

3. Verfahren nach Anspruch 1,
   dadurch gekennzeichnet,
   daß der zweite Schritt bei einer Temperatur im Bereich von 50 bis 65 °C durchgeführt wird.

4. Verfahren nach Anspruch 1,
   dadurch gekennzeichnet,
   daß im zweiten Schritt die mittlere Verweilsdauer der Flüssigkeit im Bereich von 10 bis 25 Stunden ist.

5. Verfahren nach irgendeinem der Ansprüche 1 bis 4,
   dadurch gekennzeichnet,
   daß man im zweiten Schritt eine selektive Zurückhaltung der Aluminiumoxidtrihydratkörner mit einer mittleren Abmessung von wenigstens gleich 50 bis 60 μm derart bewirkt, um ihnen eine mittlere Verweilsdauer in der Wanne von wenigstens gleich dem Zweifachen der mittleren Verweilsdauer der Aluminatflüssigkeit zu sichern.

6. Verfahren nach Anspruch 5,
   dadurch gekennzeichnet,
   daß im zweiten Schritt die mittlere Verweilsdauer der Aluminiumoxidtrihydratkörner einer Abmessung von wenigstens gleich 50 bis 60 μm im Bereich vom Fünffachen bis zum Zehnfachen der mittleren Verweilsdauer der Aluminatflüssigkeit liegt.

7. Verfahren nach Anspruch 5 oder 6,
dadurch gekennzeichnet,
daß die mittlere Aufstiegsgeschwindigkeit der Flüssigkeit in der Wanne vorzugsweise im Bereich von 1 bis 2 m/h liegt.

FIG.1